**Europäisches Patentamt**

**European Patent Office**

**Office européen des brevets**

(19)

(11) Veröffentlichungsnummer: **0 212 379 B1**

(12) # EUROPÄISCHE PATENTSCHRIFT

(45) Veröffentlichungstag der Patentschrift:
27.06.90

(21) Anmeldenummer: 86110573.2

(22) Anmeldetag: 31.07.86

(51) Int. Cl.⁵: **B01J 19/08, F02M 27/04, F23D 14/68**

(54) **Vorrichtung zum Fördern der Verbrennung in Verbrennungsanlagen.**

(30) Priorität: 21.08.85 DE 3529893

(43) Veröffentlichungstag der Anmeldung:
04.03.87 Patentblatt 87/10

(45) Bekanntmachung des Hinweises auf die Patenterteilung:
27.06.90 Patentblatt 90/26

(84) Benannte Vertragsstaaten:
AT BE CH DE FR GB IT LI NL SE

(56) Entgegenhaltungen:
EP-A- 0 048 102
DE-A- 2 263 155
DE-A- 2 435 481
FR-A- 1 199 915
FR-A- 2 239 782
FR-A- 2 293 604
GB-A- 963 291
US-A- 4 077 888
US-A- 4 096 544
(73) Patentinhaber: Keesmann, Till, Bahnhofstrasse 53 A,
D-6900 Heidelberg(DE)

(72) Erfinder: Keesmann, Till, Bahnhofstrasse 53 A,
D-6900 Heidelberg(DE)

(74) Vertreter: Hach, Hans Karl, Dr., Tarunstrasse 23,
D-6950 Mosbach-Waldstadt(DE)

**Beschreibung**

Die Erfindung betrifft eine Vorrichtung zum Fördern der Verbrennung in einer Verbrennungsanlage, mit einem Ionisierungselement, das elektrisch leitende Fasern aufweist, welche büschelartig angeordnet sind und zur Ionisierung an der Verbrennung beteiligter Gase dienen und mit einer Hochspannungsquelle, die an das Ionisierungselement angeschlossen ist, wobei das Ionisierungselement im Hauptstrom der an der Verbrennung beteiligter Gase angeordnet ist.

Bei einer aus der DE-OS 24 35 481 bekannten Vorrichtung dieser Art sind für das Ionisierungselement Fasern vorgesehen, die in die Strömung gerichtet und zum Ende hin büschelartig aufgefächert sind.

Aufgabe der Erfindung ist es, eine möglichst intensive ständige Verbesserung der Verbrennung durch Ionisierung zu erzielen. Die Lösung ist Gegenstand des Kennzeichens des Anspruchs 1. Im Interesse einer möglichst intensiven Verbrennungsförderung ist eine gleichmäßige Ionisierung wünschenswert und diese wird mit der gekennzeichneten Lösung erzielbar.

Die Erfindung ist anwendbar bei Heizungsanlagen, vor allen Dingen bei ölbrennerbetriebenen Heizungsanlagen aber auch bei normalen Kohlefeuerungsanlagen. Vorzugsweise ist die Erfindung anwendbar bei Verbrennungsanlagen in Verbrennungskraftmaschinen.

Bei einem solchen Ionisierelement sind die Fasern vorzugsweise dicht an dicht, weitgehend parallel zueinander und im Bündel zu mehreren hundert bis vielen tausend Fasern in eine Trägersubstanz, vorzugsweise hitzebeständigen, elektrisch isolierenden Kunststoff oder Keramik, eingebettet. Die Enden dieser Fasern sind abgeschnitten und ragen an der Stirnfläche, die die Oberfläche des Ionisierelementes bildet und die mit dem zu ionisierenden Gas in direkten Kontakt gerät, aus dem Trägerstoff heraus. Sie bilden so eine Vielzahl von Spitzen, an denen Spitzenentladung stattfinden kann. Die Enden der Fasern, die aus dem Trägerstoff herausragen, sind im Interesse der Spitzenentladung vorzugsweise nicht unmittelbar in elektrischem Kontakt miteinander, sie sind allerdings an den gleichen elektrischen Hochspannungspol angeschlossen, und zwar über ein längeres Stück der jeweils betreffenden Faser.

Solche Ionisierelemente sind auch deshalb vorteilhaft, weil auf der ganzen Flächenausdehnung der Faserspitzen diese in intensivem Kontakt mit dem vorbeiströmenden, zu ionisierenden Gas geraten.

Die Fasern bestehen vorzugsweise aus polykristallinem, einphasigem oder mehrphasigem Kohlenstoff oder aus Kohlenstoff mit graphitähnlicher Struktur. Es sind inzwischen Kunststoff und auch Keramikmaterialien bekannt geworden, aus denen sich feine Fasern herstellen lassen, die elektrisch leitend sind. Auch Fasern aus solchen Materialien sind für Ionisierelemente geeignet.

Vorzugsweise sind die Fasern, mit Ausnahme der für den Ionisierungskontakt und der elektrischen Anschlüsse erforderlichen Flächen in temperaturbeständiger elektrisch isolierender Trägersubstanz, vorzugsweise Kunststoff eingebettet.

Die Ionisierung kann vor der eigentlichen Verbrennung, während der eigentlichen Verbrennung, aber auch nach der Verbrennung vor oder nach einer eventuell vorgesehenen heißen oder kalten Nachverbrennung vorgenommen werden. Eine dementsprechende Weiterbildung ist Gegenstand des Anspruchs 8.

Die erzeugten Ionen werden mit dem nach der Erfindung ausgestalteten Ionisierelement schnell abtransportiert und behindern die Erzeugung nachfolgender Ionen nicht. Das kann man noch durch entsprechende Anordnung und Ausgestaltung des Ionisierelementes begünstigen.

Eine erste dementsprechende Weiterbildung ist dadurch gekennzeichnet, daß die Fasern elektrisch isoliert auf einem Abschnitt der Innenwand des Verbrennungsraums und/oder eines für Abgas vorgesehenen Gasrohres aufgeschichtet sind.

Eine zweite dementsprechende Weiterbildung ist dadurch gekennzeichnet, daß das Ionisierelement einen flachen Tragstreifen aufweist, der mit seiner Schmalseite gegen die Strömung gerichtet innerhalb des Gasrohres angeordnet ist, so daß er die Strömung möglichst wenig behindert, und daß der Tragstreifen mit den Fasern besetzt ist.

Eine dritte dementsprechende Weiterbildung ist dadurch gekennzeichnet, daß das Ionisierelement die Form eines Ringes hat, welcher Ring koaxial in einem Gasrohr angeordnet ist, und daß der Außenradius des Ringes mindestens 10 % (Prozent) kleiner ist als der Innenradius des zugehörigen Gasrohres beziehungsweise des zugehörigen Verbrennungsraums.

Bei einer Heizungsanlage und/oder bei einer Verbrennungskraftmaschine ist es vorteilhaft, das Ionisierelement in einem Gasrohr für die Zufuhr der Verbrennungsluft anzuordnen. Wenn der Brennkammer neben der Verbrennungsluft auch ein Gemisch aus Brennstoff und Verbrennungsluft zugeführt wird, was zum Beispiel bei Verbrennungskraftmaschinen und ölbrennerbetriebenen Heizungsanlagen der Fall ist, dann empfiehlt es sich, auch das Ionisierelement in einem Gasrohr für die Zuführung des Gemischs aus Brennstoff und Verbrennungsluft anzuordnen.

In vielen Fällen finden noch Reaktionen in den heißen Abgasen statt. Solche Reaktionen sind unter Umständen wünschenswert, weil dadurch unerwünschte Bestandteile der Abgase in weniger schädliche oder unschädliche Bestandteile umgesetzt werden. Diese Umsetzungen werden zum Teil begünstigt durch Katalysatoren und/oder Nachverbrennung. Für alle diese Fälle ist eine Begünstigung dieser chemischen Reaktionen wünschenswert und durch entsprechende Anordnung eines Ionisierelementes in der Hauptströmung der betreffenden an diesen Reaktionen beteiligten Gase begünstigt.

Schädlich für eine optimale Verbrennung sind auch Staubteilchen, die in den für die Verbrennung angesaugten Gasen enthalten sind. Solche Staubteilchen werden dadurch zurückgehalten, daß eine gegenüber dem Ionisierelement elektrisch gegenpo-

lig vorgespannte Elektrode in der Gasleitung dem Ionisierelement vorgeordnet ist daß die Elektrode als Staubabscheider ausgebildet ist und über den ganzen Strömungsquerschnitt verteilt angeordnete Metallelemente aufweist, die die Strömung möglichst wenig behindernd ausgebildet sind, und daß ein weiteres Ionisierelement dem Staubabscheider in der Gaszuleitung vorgeordnet ist, das, in der gleichen Weise gepolt wie das erste Ionisierelement, an die Hochspannungsquelle angeschlossen ist.

Durch die zusätzlich Ionisierung, die dem Staubabscheider vorgeordnet ist, werden die Staubteilchen elektrisch aufgeladen und gezwungen, sich an dem Staubabscheider niederzuschlagen. Ionen, die daran nicht beteiligt sind und den Staubabscheider passieren, tragen zu der zur Förderung der Verbrennung gewünschten Ionisierung bei.

Das Ionisierelement ist bei einen Einspritzmotor vorzugsweise in einer Gasleitung für die Zufuhr der Verbrennungsluft angeordnet.

Bei einem Vergasermotor ist das Ionisierelement vorzugsweise in der Luftzuleitung oder in der Gemischzuleitung oder aber sowohl in der Luftzuleitung als auch in der Gemischzuleitung angeordnet.

Die zuvor erwähnten Weiterbildungen kann man miteinander kombinieren.

Die Erfindung wird nun anhand der beigefügten Zeichnung näher erläutert.

In der Zeichnung zeigt:

Figur 1 im Blockschaltbild einen Einspritzmotor ausgerüstet mit einer Ionisiervorrichtung,

Figur 2 im Blockschaltbild einen Vergasermotor ausgerüstet mit einer Ionisiervorrichtung,

Figur 3 einen Abschnitt eines Gasrohres im Schnitt ausgerüstet mit einem Ionisierungselement,

Figur 4 einen Gasrohrabschnitt im Schnitt ausgerüstet mit einem anderen Ausführungsbeispiel eines Ionisierelementes,

Figur 5 im Blockschaltbild eine ölbetriebene Heizungsanlage mit einer Ionisiervorrichtung,

Figur 6 im Querschnitt ein Ionisierelement

Figur 7 die Ansicht gemäß dem Pfeil VII aus Figur 6 und

Figur 8 ein weiteres Ionisierelement.

In der Zeichnung ist mit 1 der Zylinderblock einer Verbrennungskraftmaschine bezeichnet. An diesen Zylinderblock ist ein Zuführer 2 für Flüssigbrennstoff angeschlossen. Mit 3 ist eine Brennstoffzuleitung bezeichnet, die zu den einzelnen Zylindern des Zylinderblocks verzweigt und in jedem Zylinder mit einer Einspritzdüse mündet. Mit 4 ist ein Luftzuführer bezeichnet. Von dem Luftzuführer führt ein Gasrohr 5 zu dem Zylinderblock 1. Innerhalb eines Rohrabschnittes 6 des Gasrohres 5 befindet sich ein Ionisierelement 7, das elektrisch isoliert angeordnet ist und an einen äußeren Hochspannungsgenerator 8 angeschlossen ist.

Innerhalb des Gasrohres 5 ist dem Ionisierelement 7 ein Staubabscheider 13 vorgeordnet. Diesem Staubabscheider 13 ist innerhalb des Gasrohres 5 ein zweites Ionisierelement 14 vorgeordnet.

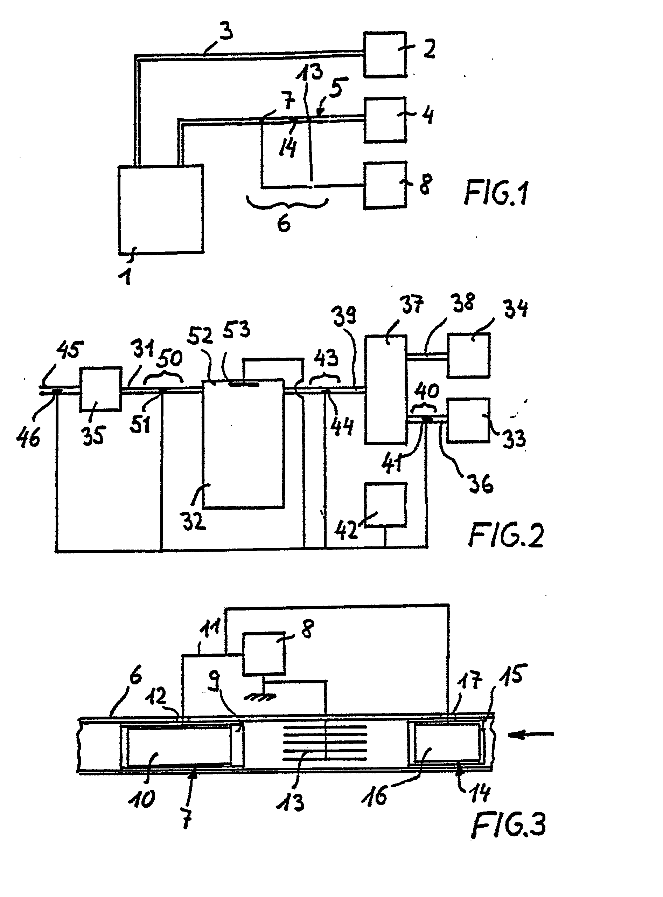

Dieser Rohrabschnitt 6 ist in Figur 3 noch einmal herausgezeichnet. Das Gasrohr 5 ist ebenso wie der Rohrabschnitt 6 metallisch leitend. Der Rohrabschnitt 6 ist innen auf dem ganzen Umfang mit einer Hochspannungsisolierung 9, 15 ausgekleidet. Die Hochspannungsisolierung 9, 15 ist auf der Innenseite mit polykristallinen einphasigen Kohlenstoff-Fasern beschichtet. Die Beschichtung ist mit 10 beziehungsweise 16 bezeichnet und bildet das Ionisierelement 7 beziehungsweise 14. Diese Beschichtungen sind elektrisch an den Minuspol des Hochspannungsgenerators 8 angeschlossen. Der Pluspol des Hochspannungsgenerators liegt, wie auch das Gasrohr 5 an Masse.

Der Staubabscheider 13 besteht aus mehreren planparallel zueinander angeordneten Metallplatten, die entlang der Strömung angeordnet sind, so daß sie die Strömung möglichst wenig behindert. Diese Metallplatten sind mit dem Gasrohr 5 an Masse angeschlossen.

Die Hochspannung des Hochspannungsgenerators beträgt mehrere kV, zum Beispiel 10 bis 35 kV. Die Flächenausdehnung der Beschichtung 10, 16 beträgt je etwa 1 bis 50 Quadratzentimeter. Der Hochspannungsgenerator weist aus Sicherheitsgründen einen hohen Innenwiderstand von mehreren Kilo-Ohm, zum Beispiel 20 Kilo-Ohm auf. Für die elektrische Anschlußleitung 11 ist eine Isolierdurchführung 12 beziehungsweise 17 in dem Rohrabschnitt 6 vorgesehen.

Wenn der Rohrabschnitt 6 aus Strom nicht leitendem Kunststoff besteht, können die Hochspannungsisolierungen 9 und 15 und die Isolierdurchführungen 12 und 17 entfallen.

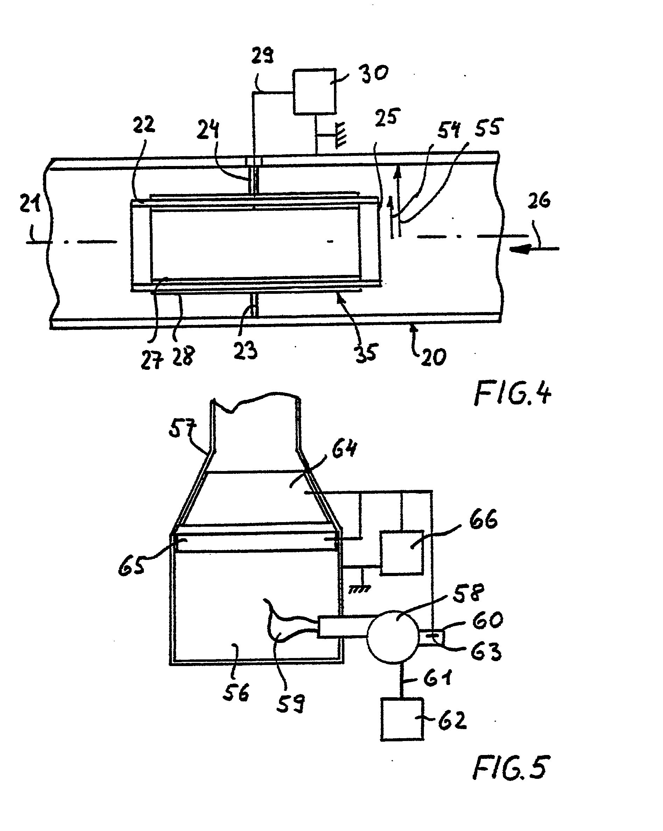

In Figur 4 ist ein dem Rohrabschnitt 6 entsprechender Rohrabschnitt 20 dargestellt, innerhalb dessen koaxial zur Rohrachse 21 ein rohrförmiger beziehungsweise ringförmiger Träger 22 mit auf den Umfang verteilt angeordneten Speichen 23, 24 am Rohrabschnitt 20 befestigt ist. Der Träger besteht aus einem flachen Tragstreifen, der rohrförmig aufgerollt ist und mit seiner Schmalseite 25 gegen die Strömung gemäß Pfeil 26 gerichtet ist. Der Träger ist beidseitig mit einer Schicht aus polykristallinen einphasigen Kohlenstoff-Fasern beschichtet. Die beiden Beschichtungen 27, 28 entsprechen der Beschichtung 10 aus Figur 3. Sie sind über eine Zuleitung 29 and den negativen Ausgangspol eines Hochspannungsgenerators 30 angeschlossen, der dem Hochspannungsgenerator 8 aus Figur 3 entspricht. Die Zuleitung ist elektrisch isoliert durchgeführt, wenn der Rohrabschnitt 20 elektrisch leitend ist. Die Beschichtungen 27 und 28 bilden das Ionisierelement. Der Außenradius 54 des ringförmen Trägers 22 ist um mindestens 10 % kleiner als der Innenradius 55 des Rohrabschnittes 20.

Bei dem in Figur 2 dargestellten Ausführungsbeispiel handelt es sich um einen Vergasermotor. Der Zylinderblock ist mit 32 bezeichnet, der Luftzuführer mit 33 und der Brennstoffzuführer mit 34. Die Luft gelangt über die Rohrleitung 36 an einen Vergaser 37, an den über die Treibstoffleitung 38 auch der Treibstoff, zum Beispiel Benzin, gelangt. Vom Vergaser führt eine Rohrleitung 39 für das Gemisch zu dem Zylinderblock 32.

Vom Zylinderblock 32 geht eine Abgasleitung 31 aus, die über einen Katalysator 35 mit nachgeordnetem Auspuff 45 ins Freie führt. Bei dem Katalysator 35 kann es sich auch um eine andere Einrichtung zur Nachverbrennung handeln. Ein Abschnitt 40 der Rohrleitung 36 ist mit einem Ionisierelement 41 ausgestattet, das an einen Hochspannungsgenerator 42 angeschlossen ist. Ein Abschnitt 43, der Rohrleitung 39 ist mit einem Ionisierelement 44 ausgestattet, das an den Hochspannungsgenerator 42 angeschlossen ist. Ein Abschnitt 50 der Abgasleitung 31 ist mit einem Ionisierelement 51 ausgestattet, daß an den Hochspannungsgenerator 42 angeschlossen ist. Ein Abschnitt des Auspuffs 45 ist mit einem Ionisierelement 46 ausgestattet, das an den Hochspannungsgenerator 42 angeschlossen ist. Ein Wandabschnitt der Innenwand 52 eines jeden Zylinders, der sich im Kopfbereich neben den Ein- und Auslaßöffnungen befindet, ist mit je einem Ionisierelement ausgestattet, wie dies durch das Ionisierelement 53 angedeutet ist. Die Ausgestaltung der Ionisierelemente und des Ionisiergenerators im einzelnen können erfolgen, wie im Text zu Figur 3 und 4 erläutert. Zur Ionisierung innerhalb des Zylinders kann man auch ein Ionisierelement verwenden, das man mit der Zündkerze kombiniert, indem man die Kunststoff-Fasern des Ionisierelementes in die Isolierkeramik der Zündkerze einbettet, wobei der elektrische Anschluß dieser Fasern an den Hochspannungsgenerator 42 parallel zur Zündleitung erfolgen kann und die zur Ionisierung freien Flächen der Kohlenstoff-Fasern zweckmäßig seitlich an der Kerze liegen, sodaß sie nicht unter dem direkten Einfluß des Zündfunken stehen.

Damit die einmal erzielte Ionisierung nicht durch elektrische Leitfähigkeit von Gasleitungen und dergleichen wieder abgebaut werden kann, empfiehlt es sich, die betreffenden Einrichtungen und Gasleitungen innen mit einer Isolierschicht auszukleiden. Vorzugsweise erfolgt eine solche Innenauskleidung im Vergaser 37, wenn das Ionisierelement 41 vorgesehen ist.

In Abänderung des Ausführungsbeispiels nach Figur 2 können eines oder mehrere der dargestellten Ionisierelemente vorgesehen sein.

In Abänderung des Ausführungsbeispiels nach Figur 4 kann zusätzlich zu den Beschichtungen 27, 28 auch noch eine Auskleidung der Innenwandung des Rohrabschnittes 20 vorgesehen sein, entsprechend wie im Text zu Figur 3 erläutert. Auch diese Auskleidung ist dann isoliert an den Minuspol des Hochspannungsgenerators 30 angeschlossen.

Das Trägerelement nach Figur 4 kann auch anders ausgebildet sein. Wichtig ist aber, daß es für die Beschichtung eine möglichst hinreichende Fläche bietet und der Gasströmung möglichst wenig Strömungswiderstand bietet.

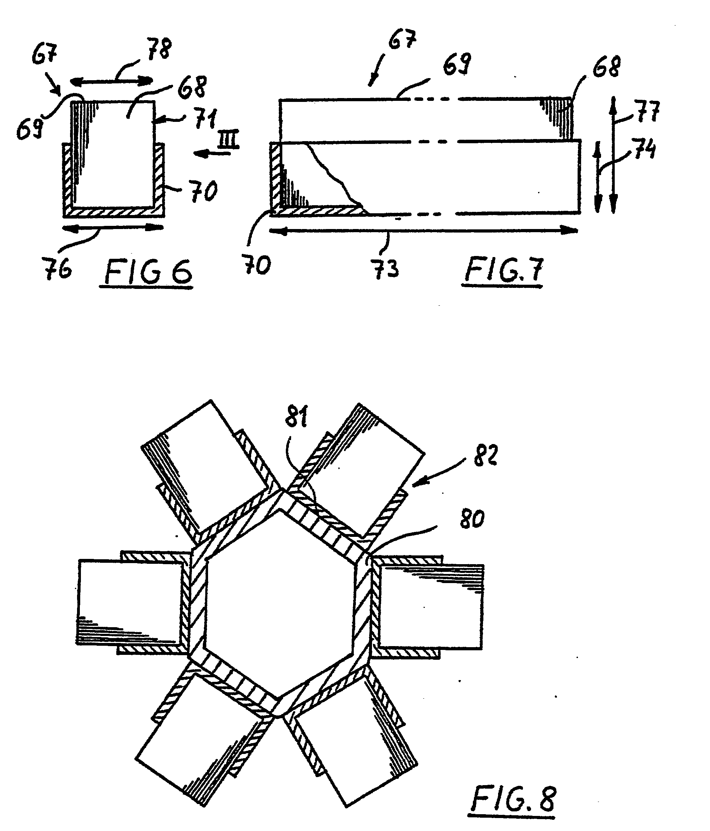

Bei der in Figur 5 dargestellten, ölbetriebenen Heizungsanlage ist der Verbrennungsraum mit 56 bezeichnet. Von dem Verbrennungsraum 56 geht als Abgasleitung ein Kamin 57 ab. In den Verbrennungsraum mündet ein Ölbrenner 58, dessen Flamme mit 59 bezeichnet ist. Zu dem Ölbrenner führt eine Luftzuleitung 60 und eine Ölzuleitung 61 aus einem Öltank 62. In der Luftzuleitung 60 ist ein Ionisierelement 63 und in dem Kamin 57 ist ein Ionisierelement 64 angeordnet. Im Verbrennungsraum 56 ist ein Ionisierelement 65 angeordnet. Diese Ionisierelemente sind an einen Hochspannungsgenerator 66 angeschlossen und können ausgestaltet und angeordnet sein entsprechend wie im Text zu Figur 3 und 4 erläutert. Statt dessen können aber auch Metallspitzen als Ionisierungselement vorgesehen sein.

Man erreicht auch schon günstige Effekte, wenn nur ein einziges Ionisierelement für die gesamte Anlage nach Figur 2 oder 5 vorgesehen ist.

Bei den Ausführungsbeispielen nach Figur 1 bis 4 bestehen die für die Ionisierung aktiven Teile der Ionisierelemente aus polykristallinen, einphasigen Kohlenstoff-Fasern.

Diese Kohlenstoff-Fasern sind, wie eingangs dargelegt, eingebettet, ausgebildet und elektrisch angeschlossen. Die Ionisierelemente bei dem Ausführungsbeispiel nach Figur 5 bestehen vorzugsweise auch aus polykrisallinen, einphasigen Kohlenstoff-Fasern, sie können aber auch aus Metallspitzen bestehen.

Bei dem in Figur 6 und 7 dargestellten Ionisierelement 67 ist mit 70 eine aus Karbon oder aus Metall bestehende Klammer bezeichnet die stabil und selbsttragend ist. In diese Klammer ist ein durchgehendes Büschel 71 von elektrisch leitenden Fasern 68 eingefaßt. Diese Fasern können aus Materialien bestehen, wie sie in den Ansprüchen 2 bis 5 gekennzeichnet sind. Die einzelnen Fasern 68 erstrecken sich längs nebeneinander, sie enden in einer gemeinsamen Stirnfläche 69. Pro Quadratzentimeter Stirnfläche sind 10.000 bis 500.000, vorzugsweise etwa 100.000, Faserenden pro Quadratzentimeter angeordnet. An diesen Faserenden erfolgt Spitzenentladung für die Ionisierung. Die Fasern sind in eine elektrisch isolierende Trägersubstanz, vorzugsweise aus Kunststoff, eingebettet. Aus dieser Trägersubstanz, die in der Zeichnung nicht sichtbar ist, ragen nur die Spitzen beziehungsweise die Enden der Fasern an der Stirnfläche 69 heraus. Ein solches Ionisierelement kann beispielsweise folgende Abmessungen haben, Länge gemäß Pfeil 73 fünfhundert Millimeter, Höhe gemäß Pfeil 74 fünf Millimeter, Breite gemäß Pfeil 76 drei Millimeter, Gesamthöhe gemäß Pfeil 77 sieben Millimeter, Büschelbreite gemäß Pfeil 78 zwei Millimeter. Die Ionisierelemente können auch noch mit erheblich kleineren Abmessungen hergestellt werden. Das Ionisierelement 67 ist stabförmig und selbsttragend. Zwischen der Klammer 70 und sämtlichen Fasern 68 des Büschels 71 besteht elektrisch leitende Verbindung.

Ionisierelemente nach Figur 6 und 7 kann man zu mehreren nebeneinander an einer Wand anordnen. Man kann mit solchen Ionisierelementen beispielsweise den Außenumfang eines Rohres besetzen, wie das beispielsweise in Figur 8 durch das sechseckige Rohr 80 dargestellt ist, das auf seinen sechs Außenflächen, zum Beispiel der Außenfläche 81 mit je einem Ionisierelement 82 nach Figur 6 und 7 besetzt ist. Diese Ionisierelemente sind entweder mit einem entsprechend hitzebeständigen Kleber oder durch Verklemmen befestigt. Entsprechend kann auch ein Rohr von innen mit Ionisierelementen besetzt sein, deren durch die Faserenden gebildeten Stirnflächen dann radial nach innen ragen. Das Rohr 80 besteht vorzugsweise aus Karbon oder aus Metall.

Ionisierelemente, wie sie anhand der Figuren 6 bis 8 beschrieben sind, können in Verbindung mit den Ausführungsbeispielen nach Figur 1 bis 5 eingesetzt werden.

## Patentansprüche

1. Vorrichtung zum Fördern der Verbrennung in einer Verbrennungsanlage,
mit einem Ionisierungselement, das elektrisch leitende Fasern aufweist, welche büschelartig angeordnet sind und zur Ionisierung an der Verbrennung beteiligter Gase dienen und
mit einer Hochspannungsquelle, die an das Ionisierungselement angeschlossen ist, wobei das Ionisierungselement im Hauptstrom der an der Verbrennung beteiligter Gase angeordnet ist, dadurch gekennzeichnet,
daß die Faser fein und büschelartig, einzeln, längs nebeneinander angeordnet sind und in einer gemeinsamen, freiliegenden Stirnfläche ( 69 ) enden, wobei 10.000 bis 500.000, vorzugsweise etwa 100.000, Faserenden beziehungsweise -spitzen pro Quadratzentimeter der Stirnfläche vorgesehen sind und die Ionisation nach Art einer Spitzenentladung von diesen Faserenden ausgeht,
daß das Ionisierelement einen flachen Tragstreifen ( 22 ) aufweist, der mit seiner Schmalseite gegen die Strömung gerichtet innerhalb des Gasrohres ( 20 ) angeordnet ist, so daß er die Strömung möglichst wenig behindert, und
daß der Tragstreifen mit den Fasern ( 27, 28 ) besetzt ist.

2. Vorrichtung nach Anspruch 1, dadurch gekennzeichnet, daß die Fasern aus polykristallinem, einphasigem oder mehrphasigem Kohlenstoff bestehen.

3. Vorrichtung nach Anspruch 1, dadurch gekennzeichnet, daß die Fasern aus Kohlenstoff mit graphitähnlicher Struktur bestehen.

4. Vorrichtung nach Anspruch 1, dadurch gekennzeichnet, daß die Fasern aus elektrisch leitfähigem Kunststoff bestehen.

5. Vorrichtung nach Anspruch 1, dadurch gekennzeichnet, daß die Fasern aus elektrisch leitfähiger Keramik bestehen.

6. Vorrichtung nach einem der Ansprüche 1 bis 4, dadurch gekennzeichnet, daß die Fasern, mit Ausnahme der für den Ionisierungskontakt und der elektrischen Anschlüsse erforderlichen Flächen in temperaturbeständiger elektrisch isolierender Trägersubstanz, vorzugsweise Kunststoff, eingebettet sind.

7. Vorrichtung nach einem der Ansprüche 1 bis 6, dadurch gekennzeichnet,
daß das Ionisierungselement ( 82 ) ringförmig ausgebildet und koaxial im Gasrohr ( 20 ) angeordnet ist und
daß die Fasern radial oder etwa radial ausgerichtet sind.

8. Vorrichtung nach einem der vorhergehenden Ansprüche, dadurch gekennzeichnet, daß ein Ionisierelement ( 41, 44, 53, 51, 46 ) in einer oder mehreren der nachfolgend aufgeführten, vom Hauptstrom der an der Verbrennung beteiligten Gase durchströmten Einrichtungen angeordnet ist: Ansaugstutzen ( 36 ); Gemischleitung ( 39 ), die vom Vergaser ( 37 ) zum Verbrennungsraum ( 32 ) führt; Verbrennungsraum ( 32 ), Abgasleitung ( 31 ), die vom Verbrennungsraum ausgeht; Abgasleitung ( 45 ), die von einer, eine Nachverbrennung fördernden Einrichtung ( 35 ) ausgeht.

9. Vorrichtung nach einem der vorhergehenden Ansprüche, dadurch gekennzeichnet, daß die Fasern des Ionisierelementes in die Isolierkeramik einer Zündkerze eingebettet sind, derart, daß die zur Ionisierung freiliegenden Flächen der Fasern seitlich an der Kerze liegen.

## Claims

1. Apparatus for assisting combustion in a combustion plant, having an ionizing element with electrically conductive fibres arranged in bunch-like manner and which are used for ionizing gases participating in the combustion and with a high voltage source connected to the ionizing element, the latter being arranged in the main flow of the gases participating in the combustion, characterized in that the fine fibres are individually arranged in bunch-like, longitudinally juxtaposed manner and terminate in a common, exposed face (69) and there are 10,000 to 500,000 preferably approximately 100,000 fibre ends or tips per cm² of end face and the ionization emanates from these fibre ends in the manner of a point discharge, that the ionization has a flat support strip (22), which is arranged with its narrow side against the flow within the gas pipe (20), so that it impedes the flow the minimum possible extent and the support strip is covered with fibres (27, 28).

2. Apparatus according to claim 1, characterized in that the fibres are made from polycrystalline, single-phase or multiphase carbon.

3. Apparatus according to claim 1, characterized in that the fibres are made from carbon with a graphite-like structure.

4. Apparatus according to claim 1, characterized in that the fibres are made from electrically conductive plastic.

5. Apparatus according to claim 1, characterized in that the fibres are made from electrically conductive ceramic.

6. Apparatus according to one of the claims 1 to 4, characterized in that the fibres, with the exception of the faces necessary for the ionization contact and the electrical connections, are embedded in heat-resistant, electrically insulating carrier substance, preferably plastic.

7. Apparatus according to one of the claims 1 to 6, characterized in that the ionizing element (82) has an annular construction and is arranged coaxially in the gas pipe (20) and that the fibres are oriented radially or approximately radially.

8. Apparatus according to one of the preceding claims, characterized in that an ionizing element (41, 44, 53, 51, 46) is arranged in one or more of the following means through which flows the main flow of the gases participating in the combustion:
Intake connection (36), mixture line (39) leading from carburetor (37) to the combustion chamber (32); combustion chamber (32), exhaust gas line (31) emanating from the combustion chamber; exhaust gas line (45) emanating from a device (35) assisting after-combustion.

9. Apparatus according to one of the preceding claims, characterized in that the fibres of the ionizing element are embedded in the insulating ceramic of a spark plug in such a way that the faces of the fibres exposed for ionization are positioned laterally on the plug.

**Revendications**

1. Dispositif pour favoriser la combustion dans une installation de combustion,
comprenant un élément d'ionisation qui comporte des fibres conductrices de l'électricité, lesquelles sont disposées en faisceau et servent à l'ionisation des gaz participant à la combustion, et:
comprenant une source de haute tension qui est reliée à l'élément d'ionisation, l'élément d'ionisation étant disposé dans le courant principal des gaz participant à la combustion, caractérisé:
par le fait que les fibres sont fines et analogues à un faisceau, individuelles et disposées les unes à côté des autres dans le sens longitudinal, et qu'elles se terminent dans une surface frontale libre et commune (69), cependant qu'il est prévu de 10 000 à 500 000 extrémités ou pointes de fibres, respectivement, par centimètre carré de la surface frontale, et de préférence 100 000 environ, et que l'ionisation part de ces extrémités de fibres à la manière d'une décharge par effet de pointes,
par le fait que l'élément ionisant comporte une bande porteuse plate (22) qui est disposée à l'intérieur du tube à gaz (20) en étant dirigée par son petit côté vers l'écoulement, de sorte qu'elle gêne l'écoulement aussi peu que possible, et:
par le fait que la bande porteuse est recouverte par les fibres (27, 28).

2. Dispositif selon la revendication 1, caractérisé par le fait que les fibres sont en carbone polycristallin à une seule phase ou à plusieurs phases.

3. Dispositif selon la revendication 1, caractérisé par le fait que les fibres sont en carbone à structure analogue à celle du graphite.

4. Dispositif selon la revendication 1, caractérisé par le fait que les fibres sont en matière plastique conductrice de l'électricité.

5. Dispositif selon la revendication 1, caractérisé par le fait que les fibres sont en céramique conductrice de l'électricité.

6. Dispositif selon l'une des revendications 1 à 4, caractérisé par le fait que les fibres, à l'exception des surfaces nécessaires pour le contact d'ionisation et pour les raccordements électriques, sont noyées dans une substance porteuse électriquement isolante et résistante à la chaleur, de préférence en matière plastique.

7. Dispositif selon l'une des revendications 1 à 6, caractérisé:
par le fait que l'élément d'ionisation (82) est réalisé en forme d'anneau et disposé coaxialement dans le tube à gaz (20), et:
par le fait que les fibres sont dirigées radialement ou à peu près radialement.

8. Dispositif selon l'une des revendications précédentes, caractérisé par le fait qu'un élément ionisant (41, 44, 53, 51, 46) est disposé dans un ou plusieurs des dispositifs qui sont cités ci-après et qui sont traversés par le courant principal des gaz participant à la combustion:
Tubulure d'aspiration (36); conduite de mélange (39) qui mène du carburateur (37) à la chambre de combustion (32); chambre de combustion (32); conduite de gaz d'échappement (31) qui part de la chambre de combustion; conduite de gaz d'échappement (45) qui part d'un dispositif (35) favorisant une post-combustion.

9. Dispositif selon l'une des revendications précédentes, caractérisé par le fait que les fibres de l'élément ionisant sont noyées dans la céramique isolante d'une bougie d'allumage de telle sorte que les surfaces libres des fibres destinées à l'ionisation soient situées latéralement sur la bougie.

FIG.1

FIG.2

FIG.3

FIG.4

FIG.5

FIG 6

FIG. 7

FIG. 8